(19) Europäisches Patentamt
European Patent Office
Office européen des brevets

(11) Veröffentlichungsnummer: **0 327 806 A2**

# (12) EUROPÄISCHE PATENTANMELDUNG

(21) Anmeldenummer: **89100253.7**

(51) Int. Cl.4: **C08L 77/00 , C08L 51/04**

(22) Anmeldetag: **09.01.89**

(30) Priorität: **20.01.88 DE 3801537**

(43) Veröffentlichungstag der Anmeldung: **16.08.89 Patentblatt 89/33**

(84) Benannte Vertragsstaaten: **DE FR GB IT NL**

(71) Anmelder: **BAYER AG**
**D-5090 Leverkusen 1 Bayerwerk(DE)**

(72) Erfinder: **Westeppe, Uwe, Dr.**
**Yorckstrasse 19**
**D-5630 Remscheid 11(DE)**
Erfinder: **Lindner, Christian, Dr.**
**Riehler Strasse 200**
**D-5000 Köln 60(DE)**
Erfinder: **Piejko, Karl-Erwin, Dr.**
**Unterscheider Weg 7a**
**D-5060 Bergisch Gladbach 2(DE)**
Erfinder: **Merten, Josef, Dr.**
**Krünsend 30**
**D-4052 Korschenbroich 1(DE)**

## (54) Mit Silikon-Pfropfkautschuken modifizierte, schlagzähe Polyamidformmassen.

(57) Die Erfindung betrifft mit speziellen Silikon-Pfropfkautschuken schlagzäh modifizierte Polyamide mit guter Tieftemperaturzähigkeit und guter Verarbeitungsstabilität auch bei hohen Temperaturen sowie guten Oberflächen.

Die Formmassen, die sich durch sehr gute mechanische Eigenschaften auch bei tiefen Temperaturen auszeichnen, bestehen aus mindestens 40 Gew.-% Polyamid und speziellen Pfropfkautschuken mit mehrschaliger Kern/Mantel-Struktur mit einem Kern auf Silikonbasis.



Xerox Copy Centre

# Mit Silikon-Pfropfkautschuken modifizierte, schlagzähe Polyamidformmassen

Die Erfindung betrifft mit speziellen Silikon-Pfropfkautschuken schlagzäh modifizierte Polyamide mit guter Tieftemperaturzähigkeit und guter Verarbeitungsstabilität auch bei hohen Temperaturen sowie guten Oberflächen.

Die Formmassen, die sich durch sehr gute mechanische Eigenschaften auch bei tiefen Temperaturen auszeichnen, bestehen aus mindestens 40 Gew.-% Polyamid und speziellen Pfropfkautschuken mit mehrschaliger Kern/Mantel-Struktur mit einem Kern auf Silikonbasis.

Formkörper aus Polyamiden haben sich aufgrund ihrer mechanischen Festigkeitswerte wie Steifigkeit, Abriebfestigkeit, Härte dynamischer und thermischer Belastbarkeit und ihrer leichten Herstellbarkeit bewährt. Ein Nachteil ist ihre unzureichende Zähigkeit.

Es gibt eine Reihe von Vorschlägen, die Zähigkeit von Polyamidformmassen durch Zumischen anderer Polymere zu verbessern. So wurden Polyolefine (DE-A 1 694 802, DE-A 2 038 317, DE-A 3 002 295) und Ethylenionomere (EP-A 340 704, EP-A 69 200, EP-A 72 480) vorgeschlagen. Weiterhin sind Modifikatoren auf Basis gepfropfter Acrylat- und Dienkautschuke bekannt (EP-A 3 126, DE-A 2 758 615, DE-A 3 101 771, DE-A 3 120 803), die nach speziellen Verfahren hergestellt werden.

Für viele Anwendungen hat sich aber gezeigt, daß die Produkte nicht zur vollen Zufriedenheit eingesetzt werden können. Es werden dafür besondere Anforderungen, insbesondere bei tiefen Temperaturen, gestellt; außerdem wird vom Anwender eine gute Verarbeitbarkeit, auch bei hohen Temperaturen gefordert.

Gegenstand der Erfindung sind somit Polyamidformmassen, die sich durch sehr gute mechanische Eigenschaften auch bei tiefen Temperaturen auszeichnen und aus mindestens 50 Gew.-% Polyamid und einem Silikonpfropfkautschuk mit spezieller Struktur aufgebaut sind. Die Formmassen haben außerdem eine hohe Verarbeitungsstabilität auch bei höheren Temperaturen in Kombination mit einer hohen Alterungsstabilität gegen Umwelteinflüsse.

Gegenstand der Erfindung sind somit tieftemperaturzähe, verarbeitungs- und alterungsstabile Polyamidformmassen aus

I. mindestens 40 Gew.-Teile bis 99 Gew.-Teile, vorzugsweise 60 - 85 Gew.-Teile, insbesondere 65 -80 Gew.-Teile, eines thermoplastischen Polyamids I

und

II. 60 - 1 Gew.-Teile, vorzugsweise 15 - 40 Gew.-Teile, insbesondere 20 - 35 Gew.-Teile eines teilchenförmigen Pfropfkautschuks II aus

a) einem Kern aus 0,1 bis 90 Gew.-Teile eines vernetzten Silikonkautschuks,

b) einer ersten Hülle von 99,9 bis 10 Gew.-Teilen eines vernetzten Acrylatkautschuks und

c) einer zweiten Hülle, die ein Polymerisat oder Copolymerisat von Monomeren aus der Reihe Styrol, $\alpha$-Methylstyrol, Acrylnitril, Acryl-(meth)acrylat darstellt, wobei das Gewichtsverhältnis von (a+b):c im Bereich von 7:15 bis 19:3 liegt.

Vorzugsweise sollen sich die genannten Gewichtsteile auf 100 ergänzen.

Diese Polyamidformmassen können übliche Mengen an bekannten Zusatzstoffen (z.B. Stabilisatoren, Verarbeitungshilfsmitteln, Flammschutzmitteln, Füllstoffen oder Verstärkungsstoffen) enthalten.

Die erfindungsgemäßen Formmassen zeichnen sich durch gute mechanische Eigenschaften, insbesondere eine gute Tieftemperaturzähigkeit aus. Vorteilhaft sind weiterhin die gute Alterungsbeständigkeit, das breite Verarbeitungsfenster sowie der excellente Rohton der Formmassen. Im Vergleich zu Acrylatkautschuken ist die Tieftemperaturzähigkeit, im Vergleich zu anderen bekannten Silikonkautschuken ist die Wirksamkeit verbessert. Überraschenderweise weisen die Pfropfkautschuke trotz ihres Acrylatanteils eine hohe Verarbeitunsstabilität auf.

Als Polyamid-Komponente I) der erfindungsgemäßen Formmassen eignen sich alle Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder Sebacinsäure und/oder Azelainsäure und/oder Dodecandisäure und/oder Adipinsäue und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4 und/oder 2,4,4-Trimethylhexamethylendiamin und/oder Isophorondiamin bestehen und deren Zusammensetzungen aus dem Stand der Technik bekannt sind.

Außerdem sind teilkristalline Polyamide zu nennen, die ganz oder teilweise aus Lactamen mit 6 bis

12C-Atomen, gegenbenenfalls unter Mitverwendung einer oder mehrerer der obengenannten Ausgangskomponenten, hergestellt werden.

Besonders bevorzugte teilkristalline Polyamide I) sind Polyamid-6 und Polyamid-6,6 oder Copolyamide mit nur geringen Anteilen (bis etwa 10 Gew.-%) der Cokomponenten.

Es können auch als Polyamidkomponente I) amorphe Polyamide eingesetzt werden. Sie werden erhalten durch Polykondensation von Diaminen, beispielsweise Ethylendiamin, Hexamethylendiamin, Decamethylendiamin, 2,2,4- und/oder 2,4,4-Trimethylhexamethylendiamin, m-und/oder p-Xylylendiamin, Bis-(4-aminocyclohexyl)-methan, oder Gemischen aus 4,4′-, 2,4′- oder 2,2′-Diaminodicyclohexylmethanen, 2,2-Bis-(4-aminocyclohexyl)-propan, 3,3′-Dimethyl-4,4′-diamino-dicyclohexylmethan, 3-Aminoethyl-3,5,5-trimethyl-cyclohexylamin, 2,5- und/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4-und/oder 2,4,4-Trimethyladipinsäure, Isophthalsäure oder geringen Mengen an Terephthalsäure, Selbstverständlich sind auch amorphe Copolymere, die durch Polykondensation mehrerer Monomere erhalten werden, geeignet, ferner solche Copolymere, die unter Zusatz von Aminocarbonsäuren wie ε-Aminocapronsäure, ω-Aminoundecansäure oder ω-Aminododecansäure oder ihren Lactamen, hergestellt werden.

Für amorphe Polyamide werden vorzugsweise solche Komponenten mitverwendet, welche in mindestens einer Komponente unsymmetrisch aufgebaut sind, z.B. Isophorondiamin oder Isophthalsäure, unsymmetrisch substituiert sind (2,2,4-Trimethyladipinsäure) oder Gemische von (Stereo)Isomeren darstellen.

Besonders geeignete amorphe Polyamide sind die Polyamide, hergestellt aus Isophthalsäure, Hexamethylendiamin und weiteren Diaminen wie 4,4′-Diaminodicyclohexylmethan, Isophorondiamin, 2,2,4- und/oder 2,4,4-Trimethylhexamethylendiamin, 2,5-und/oder 2,6-Bis-(aminomethyl)-norboran; oder aus Isophthalsäure, 4,4′-Diamino-di-cyclohexylmethan und ε-Caprolactam; oder aus Isophthalsäure, 3,3′-Dimethyl-4,4′-diaminodicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4′-Diaminodicyclohexylmethans können auch Gemische der stellungsisomeren Diaminodicyclohexylmethane eingesetzt werden, sie sich zusammensetzen aus
70 bis 99 Mol-% des 4,4′-Diaminoisomeren
1 bis 30 Mol-% des 2,4′-Diaminoisomeren
0 bis 2 Mol-% des 2,2′-Diaminoisomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Teilchenförmige Pfropfpolymerisate (II) im Sinne der Erfindung, bestehen aus einem Kern (a), der einen teilchenförmigen, vernetzten Silikonkautschuk darstellt, einer ersten Hülle (b), die einen vernetzten Acrylatkautschuk darstellt, und einer zweiten Hülle (c), die ein Polymerisat oder Copolymerisat aus harzbildenden Monomeren darstellt, wobei b) und c) jeweils überwiegend als Pfropfpolymerisate auf der jeweiligen Grundlage vorliegen.

Das Gewichtsverhältnis des Kerns (a) und der ersten Hülle (b) ist 0,1 - 99,9 bis 90 - 10, bevorzugt 30 - 70 bis 80 - 20, und der Anteil von (c) am gesamten Pfropfpolymerisat (II) 85 - 25, bevorzugt 80 -40 Gew.-% Teile. Insbesondere bevorzugt sind Pfropfpolymerisate II, bei denen die angegebenen Zahlen Gewichtsprozente sind. Die erfindungsgemäßen Pfropfpolymerisate haben mittlere Teilchendurchmesser ($d_{50}$) von 0,05 bis 10 µm, bevorzugt 0,1 bis 2 µm. Besonders bevorzugte Teilchendurchmesser sind 0,1 bis 1 µm. (Zur Messung siehe W. Scholtan u. H. Lange, Kolloid-Zeitschrift und Zeitschrift für Polymere, 250 (1972), S. 787 -796).

Das Material des Kerns (a) ist ein vernetzter Silikonkautschuk und enthält Einheiten der allgemeinen Formel

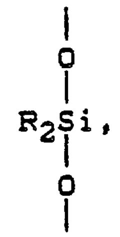 , 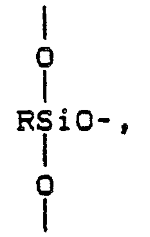 , $R_3SiO-$ und 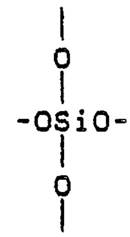

$(R_2SiO)$; $(RSiO_{3/2})$; $(R_3SiO_{1/2})$; $(SiO_2)$

wobei R einen einwertigen organischen Rest darstellt.

Die Mengen der einzelnen Siloxaneinheiten sind dabei so bemessen, daß auf 100 Mol Einheiten der Formel $R_2SiO$; Null bis 10 Mol Einheiten der Formel $RSiO_{3/2}$; Null bis 1,5 Mol Einheiten $R_3SiO_{1/2}$ und Null bis 3 Mol Einheiten der Formel $SiO_2$ vorhanden sind.

R kann ein einwertiger gesättigter Kohlenwasserstoffrest mit 1 bis 18 Kohlenstoffatomen, der Phenylrest oder ein Alkoxy-Rest oder eine radikalisch angreifbare Gruppe wie ein Vinyl- oder γ-Mercaptopropylrest sein. Bevorzugt ist ist, daß mindestens 80 % aller Reste R Methyl sind; insbesondere bevorzugt sind Kombinationen aus Methyl und Ethyl.

Bevorzugte Silikonkautschuke (a) enthalten eingebaute Einheiten radikalisch angreifbarer Gruppen, d.h. solche, die zur Radikaladdition oder Übertragungsreaktion befähigt sind, insbesondere Vinyl-, Allyl-, Chloralkyl-, Mercaptogruppen, vorzugsweise in Mengen von 2-10 Mol-%, bezogen auf alle Reste R.

Die erste Hülle (b) stellt einen vernetzten Acrylatkautschuk dar und ist insbesondere ein vernetztes (Pfropf-)-Polymerisat (überwiegend Pfropfpolymerisat) aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylester, beispielsweise Methyl-, Ethyl-, Butyl-Octyl-, und 2-Ethylhexylester, Halogenalkylester, bevorzugt $C_1$-$C_8$-Halogenalkylester, wie Chlorethylacrylat, und aromatische Ester wie Benzylacrylat und Phenethylacrylat. Sie können einzeln oder in Mischung eingesetzt werden, wobei im Falle einer Mischung mindestens ein Alkylester im Gemisch vorhanden sein soll. Zur Vernetzung werden zwei- oder mehrfunktionelle Monomere ("polyfunktionelle" Monomere) copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacarylat, Estere einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin oder auch Alkylenbisacrylamide. Besonders bevorzugte polyfunktionelle Monomere sind Triallylcyanurat, Triallylisocyanurat, Triallylphosphat, Allylmethacrylat. Die Menge der zur Vernetzung benutzten polyfunktionellen Monomere ist bevorzugt 0,05 bis 5,0 Gew.-% der Masse der ersten Hülle (b).

Der vernetzte, Pfropf-Acrylatkautschuk der ersten Hülle (b) kann zusätzlich noch ein copolymerisierbares Monomer oder mehrere solcher Monomeren vom Vinyl- oder Vinylidentyp einpolymerisiert enthalten. Beispiele sind: Methylmethacrylat, Butylacrylat, Acrylnitril, Styrol, α-Methylstyrol, Acrylamide, Vinylalkylether. Diese Comonomere können in Mengen bis zu 40 Gew.-% des Polymerisats (b) einpolymerisiert werden.

Die zweite Hülle (c) stellt ein pfropfpolymerisiertes Polymerisat aus polymerisierbaren Monomeren aus der Reihe α-Methylstyrol, Styrol, Acrylnitril, Alkyl(meth)acrylate mit bis zu 8 C-Atomen im Alkoholrest, Maleinsäurederivate, insbesondere Maleinimide oder Vinylacetat, dar. Besonders bevorzugt sind Copolymerisate aus wenigstens zwei Monomeren aus der Reihe Styrol, α-Methylstyrol, Acrylnitril, Alkylmethacrylat und Alkylacrylat. Insbesondere bevorzugt sind Copolymerisate mit Gehalten von mehr als 60 Gew.-% Alkylmethacrylat. Die Pfropfpolymerisate sind bekannt und werden wie folgt hergestellt:

In einer ersten Stufe wird eine Emulsion des Kernmaterials (a) hergestellt:

Die Herstellung einer Emulsion eines langkettigen, OH-terminierten Silikonöls durch Emulsionspolymerisation ist z.B. in US-PS 2 891 910 und in GB-PS 1 024 024 beschrieben und wird hiermit in diese Beschreibung eingeführt. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer oder anionischer Natur sein.

Im allgemeinen sind solche Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Silikonöls erfolgt z.B. weiterhin über die Temperatur bei der Gleichgewichtsbildung zwischen Siloxan, Wasser und dem durch Ringöffnung des Siloxans zunächst gebildeten Silanöls.

Der Einbau von radikalisch angreifbaren Gruppen in das bevorzugte Silikoncopolymer kann durch Arbeiten in Anwesenheit geeigneter Siloxanoligomere erfolgen. Geeignete Ausgangsoligomere sind z.B. Tetramethyltetravinylcyclotetrasiloxan oder γ-Mercaptopropylmethyldimethoxysilan oder dessen Hydrolysat.

Diese funktionellen Oligomere können dem Basisoligomer zur Copolymerisation, Octamethylcyclotetrasiloxan in den gewünschten Mengen beigefügt werden.

Analog kann auch der Einbau längerkettiger Alkylreste R, wie z.B. Ethyl-, Propyl- oder dergleichen bzw. der Einbau von Phenylgruppen erreicht werden.

Die Silikonpfropfgrundlage muß wenigstens teilweise vernetzt sein.

Eine ausreichende Vernetzung kann jedoch schon stattfinden, indem z.B. die bevorzugten eingesetzten Vinyl-und Mercaptopropylgruppen bei der Emulsionspolymerisation der Silikonbestandteile miteinander reagieren, so daß die Zugabe eines externen Vernetzers nicht erforderlich sein kann. Dennoch kann durchaus ein Vernetzung bewirkendes Silan zugefügt weden, um den Vernetzungsgrad des Silikonkautschukes zu erhöhen.

Der Einbau von Verzweigungen oder Vernetzungen kann durch Zugabe von z.B. Tetraethoxysilan oder eines Silans der allgemeinen Formel $RSiX_3$, wobei X eine hydrolisier bare Gruppe, insbesondere den Alkoxyrest darstellt, erfolgen. R hat die im Vorhergehenden beschriebene Bedeutung. Bevorzugt sind R = Methyl und R = Phenyl. Insbesondere bevorzugt sind neben Tetraethoxysilan Methyltrimethoxysilan oder Phenyltrimethoxysilan.

In der zweiten Stufe des erfindungsgemäßen Verfahrens wird in Gegenwart des Silikonkautschuklatex der ersten Stufe, durch Emulsionspolymerisation der Acrylatkautschuk für die erste Hülle (b) hergestellt, indem man die Monomere (Hauptbestandteil wenigstens ein Acrylat) in dem Silikon-Latex emulgiert und in an sich bekannter Weise mit Hilfe radikalbidlender Initiatoren polymerisiert. Der Acrylatkautschuk wird überwiegend auf den Silikonkautschukkern aufgepfropft.

Er kann durch Mitverwendung polyfunktioneller Monomerer bereits bei der Herstellung vernetzt werden. Dieses Vorgehen ist bevorzugt.

Bei dieser Pfropfpolymerisation der ersten Hülle (b) muß die Bildung neuer Teilchen möglichst vollständig unterbunden werden. Ein Emulsionsstabilisator muß in zur Oberflächenbedeckung der Teilchen erforderlicher Menge vorhanden sein. Die Größe dieser Teilchen ist durch die Reaktionsführung in weiten Grenzen zu variieren. Verwendet man als Kern (a) einen agglomerierten Latex um große Teilchen zu erhalten, so können diese großen Teilchen mehrere kleine Silikonkautschukpartikel enthalten. Man kann die Polymerisation der ersten Hülle (b) auch so führen, daß Partikel mit Silikonkautschuk und gleichzeitig Partikel aus reinem vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks wird auf den erhaltenen Latex ein Vinylmonomer oder ein Gemisch aus Monomeren in Emulsion (pfropf-)polymerisiert. Dabei bilden sich die erfindungsgemäßen Pfropfpolymerisate unter Ausbildung der zweiten Hülle (c). Bei dieser an sich bekannten Pfropfpolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem Pfropfpolymerisat im bestimmten Ausmaß freie Polymerisate bzw. Copolymerisate der die zweite Hülle (c) bildenden Monomere. Die Menge dieses ungepfropften Polymerisats kann durch den Pfropfgrad bzw. die Pfropfausbeute charakterisiert werden, sie hängt ab u.a. von den Polymerisationsbedingungen, der Zusammensetzung der ersten Hülle (b), der Größe der zu pfropfenden Teilchen und der Menge an gepfropftem Acrylatkautschuk. "Pfropfpolymerisat" im Sinne der Erfindung ist deshalb das durch Polymerisation von Vinylmonomeren also entstandene Gemisch aus Pfropfpolymerisat und anteilig zwangsläufig anfallendem freiem Copolymerisat der Pfropfmonomere.

Die so hergestellten, erfindungsgemäßen Pfropfpolymerisate können nach bekannten Verfahren aufgearbeitet werden, z.B. durch Koagulation der Latices mit Elektrolyten (Salze, Säuren oder Gemische davon) und anschießende Reinigung und Trocknung.

Die Polyamide I sollen vorzugsweise eine relative Viskosität (gemessen an einer 1 Gew.-%igen Lösung in m-Kresol bei 25 °C) von 2,0 bis 5,0, vorzugsweise 2,5 bis 4,0 auf.

Die erfindungsgemäßen Formmassen, können übliche Additive, wie Gleit- und Enformungsmittel, Nukleierungsmittel, Stabilisatoren, Füll- und Verstärkungsstoffe, Flammschutzmittel, Farbstoffe sowie Thermostabilisatoren, Antioxidantien und/oder Lichtschutzmittel enthalten.

Die Herstellung der Formmassen kann durch Vermischen der Komponenten in üblichen Mischaggregaten, wie Walzen, Knetern, Ein- oder Mehrwellenextrudern, erfolgen.

Die Temperatur bei der Herstellung der Mischungen sollte mindestens 10 °C und zweckmäßig höchstens 90 °C oberhalb des Polyamidschmelzpunktes liegen. Entsprechend dem Eigenschaftsbild eignen sich Formmassen überall im Spritz- und Extrusionssektor, wo die beschriebenen Eigenschaften gefordert werden wie z.B. im Kfz.-Bereich für Stoßfänger, Karosserieteile oder im Sport/Freizeitsektor.

Beispiele

Verwendete Komponenten:

I. Polyamid

Polyamid 6 mit einer relativen Viskosität (gemessen an einer 1 Gew.-%igen Lösung in m-Kresol bei 25 °C) von 3,5.

II. Herstellung der Pfropfpolymerisate (erfindungsgemäß)

a) Herstellung einer Silikonemulsion

38,4 Gew.-Tl. Octmethylcyclotetrasiloxan, 1,2 Gew.-Tl. Tetramethyltetravinylcyclotetrasiloxan und 1 Gew.-Tl. $\gamma$-Mercaptopropylmethyldimethoxysilan werden miteinander verrührt. 0,5 Gew.-Tl. Dodecylbenzolsulfonsäure werden zugefügt, anschließend 58,4 Gew.-Tl. Wasser innerhalb 1 h zudosiert. Dabei wird intensiv gerührt. Die Voremulsion wird mit Hilfe einer Hochdruckemulgiermaschine zweimal bei 200 bar homogenisiert. Man gibt weitere 0,5 Gew.-Tl. Dodecylsulfonsäure zu.

Die Emulsion wird 2 h bei 85 °C und anschließend 36 h bei Raumtemperatur gerührt. Neutralisiert wird mit Hilfe 1N-NaOH. Es resultieren 100 Gew.-Tl. einer stabilen Emulsion mit einem Feststoffgehalt von ca. 37% (bestimmt nach DIN 53 182). Die Teilchengröße beträgt 285 nm (Mittelwert $d_{50}$). Der Gelgehalt des Polymers beträgt 83 Gew.-%.

b) Herstellung von Silikonemulsionen mit einer vernetzten Acrylathülle im Sinne der Erfindung

In einem Reaktor werden X Gew.-Tl. obiger Silikonemulsion a) und Y Gew.-Tl. Wasser vorgelegt. Bei 70 °C fügt man eine Initiatorlösung aus Z Gew.-Tl. Kaliumperoxodisulfat in 100 Gew.-Tl. Wasser zu. Anschließend werden innerhalb von 5 Std. bei 70 °C zwei Zuläufe in den Reaktor eingespeist. Anschließend wird 4 Stunden bei 70 °C nachgerührt. Es bilden sich Latices mit Feststoffgehalten von 36 Gew.-%.

| Eingesetzte Mengen: | | | | | |
|---|---|---|---|---|---|
| Polymerisattyp | B1 | B2 | B3 | B4 | B5 |
| X | 4147 | 3687 | 3227 | 2765 | 3686 |
| Y | 79 | 70 | 251 | 523 | 71 |
| Z | 2,5 | 3,0 | 3,3 | 3,5 | 3,0 |
| Zulauf 1 | | | | | |
| nBA | 173 | 345 | 518 | 690 | 345 |
| TAC | 0,5 | 1,0 | 1,5 | 2,0 | 4,0 |
| Zulauf 2 | | | | | |
| Emulgator | 4,0 | 7,0 | 10,0 | 14,0 | 7,0 |
| Wasser | 265 | 560 | 660 | 660 | 560 |
| Eigenschaften der Emulsionen: | | | | | |
| mittl. Teilchengröße [nm] ($d_{50}$) | 290 | 300 | 310 | 350 | 305 |
| Gehalt an Silikon a) im Polymer (Gew.-%) | 90 | 80 | 70 | 60 | 80 |

nBA = n-Butylacrylat
TAC = Triallylcyanurat
Emulgator = Na-Salze von $C_{14}$-$C_{18}$-Alkylsulfonsäuren

c) Pfropfpolymerisate im Sinne der Erfindung

In einem Reaktor wird eine Mischung aus Wasser (130 Gew.-Tl.) und 3069 Gew.-Tl. Emulsion (B1-B5) vorgelegt. Bei 70 °C fügt man eine Initiatorlösung aus 2,5 Gew.-Tl. Kaliumperoxodisulfat in 50 Gew.-Tl. Wasser hinzu. Anschließend werden zwei Zuläufe gleichmäßig innerhalb von 4 Stunden in den Reaktor eingespeist. Dann läßt man innerhalb von 4 Stunden auspolymerisieren.

| | |
|---|---|
| Zulauf 1: | 400 Gew.-Tl. Methylmethacrylat<br>47,5 Gew.-Tl. n-Butylacrylat<br>28,5 Gew.-Tl. tert.-Butylacrylat |
| Zulauf 2: | 7,5 Gew.-Tl. Na-Salz von $C_{14}$-$C_{18}$-Alkylsulfonsäuren<br>500 Gew.-Tl. Wasser |

Es resultieren Emulsionen, enthaltend Pfropfpolymerisate C aus 70 Gew.-% Kautschuk B und 30 Gew.-% Terpolymer aus Methylmethacrylat, n-Butyl- und tert.-Butylacrylat.

| Hergestellte Pfropfpolymerisate: | C1 | C2 | C3 | C4 | C5 |
|---|---|---|---|---|---|
| Kautschukbasis | B1 | B2 | B3 | B4 | B5 |

Die Pfropfpolymerisate werden mit wäßriger $MgSO_4$-Lösung bei 80-95 °C koaguliert, gewaschen und zum Pulver aufgearbeitet.

Vergleichspfropfpolymerisat C 6

Hergestellt wird ein Pfropfpolymerisat, das als Kautschukbasis nur die Komponente a) enthält, also keinen Acrylatkautschukanteil gemäß Verfahrensweise b). Die Herstellung und Isolierung der Pfropfpolymerisate wurden analog c) durchgeführt, wobei mit einer Gesamtvorlage (Latex a) und Wasser) von 3199 Gew.-Tl. gearbeitet wurde und die gleiche Menge Kautschuk in dieser Vorlage vorgelegt wurde wie bei der Herstellung von c).

III. Herstellung und Prüfung der Formmassen

Auf einem kontinuierlich arbeitenden Doppelwellenextruder wurde die Polyamidkomponente aufgeschmolzen und die Pfropfkautschuke zudosiert. Die Zylindertemperaturen betrugen 280-290 °C. Der Schmelzstrang wurde in Wasser abgeleitet, granuliert und getrocknet.

Von den Formmassen wurden auf einer übichen Spritzgußmaschine 80 x 10 x 4 $mm^3$ Prüfstäbe hergestellt. Gerüft wurde der Biege-E-Modul (DIN 53 457) und die Kerbschlagzähigkeit ($a_k$) nach Izod (ISO 180) bei verschiedenen Temperaturen und daraus der Spröd/Zäh-Übergang ermittelt.

Die Zusammensetzung und Eigenschaften der Formmassen zeigt Tabelle 1:

Tabelle 1

| Beispiel | Pfropfpolymerisat Typ | Biege-E-Modul [MPa] | RT | $a_k$ | | Zäh/Spröd-Übergang [°C] |
|---|---|---|---|---|---|---|
| | | | | -20 °C | -40 °C | |
| | | | | [kJ/m²] | | |
| 1 | C 1 | 1579 | 58,6 | 18,4 | ---- | +10/0 |
| 2 | C 2 | 1644 | 92,0 | 73,2 | 37,7 | -30/-40 |
| 3 | C 3 | 1728 | 96,5 | 79,2 | 61,5 | -40/-50 |
| 4 | C 4 | 1732 | 87,9 | 88,5 | 68,8 | -40/-50 |
| 5 | C 5 | 1706 | 90,5 | 75,3 | 37,1 | -30/-40 |
| 6* | C 6 | 1592 | 11,0 | ---- | ---- | > RT |

*Vergleichsversuch
RT = Raumtemperatur
$a_k$ = Kerbschlagzähigkeit

Alle Formmassen zeichnen sich durch eine helle Eigenfarbe aus. Der Strang aus Beispiel 6 ist jedoch im Gegensatz zu den erfindungsgemäßen Formmassen (Beispiel 1-5) rauh (schlechte Oberfläche).

## Ansprüche

1. Thermoplastische Formmassen aus
I 40-99 Gew.-Teile, vorzugsweise 60-85, insbesondere 65-80 Gew.-Teile eines Polyamids (I) und
II 60-1 Gew.-Teile, vorzugsweise 15-40 Gew.-Teile, insbesondere 30-35 Gew.-Teile eines Pfropfkautschuks II aus
a) einem Kern aus 0,1 bis 90 Gew.-Teilen eines vernetzten Silikonkauschukes
b) und einer Hülle von 99,9 bis 10 Gew.-Teilen eines vernetzten Acrylatkautschuks
c) und einer weiteren Hülle aus harzbildenden Monomeren aus der Reihe α-Methylstyrol, Styrol, Arylnitril, Alkyl(meth)-acrylate, Maleinsäurederivate, Vinylacetat,
wobei das Gewichtsverhältnis (a+b):c) im Bereich von 7:15 bis 19:3 liegt.

2. Formmassen nach Anspruch 1, dadurch gekennzeichnet, daß der Kern (a) aus 30-80 Gew.-Teilen eines teilchenförmigen, vernetzten Silikonkautschuks besteht.

3. Formmassen nach Ansprüchen 1 und 2, dadurch gekennzeichnet, daß in dem Silikonkautschukkern a) auf 100 Moleinheiten der Formel $R_2SiO$; null bis 10 Moleinheiten der Formel $RSiO_{3/2}$; null bis 1,5 Moleinheiten der Formel $RSiO_{1/2}$ und null bis 3 Moleinheiten der Formel $SiO_2$ vorhanden sind.

4. Formmassen nach Ansprüchen 1 - 3, dadurch gekennzeichnet, daß in den Silikonkautschukeinheiten R ein gesättigter Kohlenwasserstoffrest mit 1-18 C-Atomen, vorzugsweise ein Methylrest, ein Phenylrest, ein Alkoxyrest oder eine radikalisch angreifbare Gruppe, wie ein Vinyl, Allyl, Chloralkyl oder γ-Mercaptopropylrest, in Mengen von 2-10 Mol-%, bezogen auf alle Reste, ist.

5. Formmassen nach Ansprüchen 1 bis 4, dadurch gekennzeichnet, daß die Hülle (b) des vernetzten Silikonkautschukkerns a) aus einem vernetzten, überwiegend Pfropf-Acrylatkautschuk aus Acrylsäureestern, mit bis zu 40 Gew.-% anderer Vinylmonomere, vorzugsweise auf der Basis C1-C8 Acryl oder Methacrylester, Halogenacrylester und aromatische Ester, Acrylnitril, Styrol, α-Methylstyrol, Acrylamiden, Vinylacrylethern, einzeln oder in Mischung und aus 2 oder mehr funktionellen Monomeren besteht.

6. Formmassen nach Anspruch 5, dadurch gekennzeichnet, daß die Mischung mindestens einen Alkylester enthält.

7. Formmassen nach Anspruch 4, dadurch gekennzeichnet, daß die Menge der 2- oder mehrfunktionellen Monomeren 0,05 bis 5,0 Gew.-% der Hülle b) beträgt.

8. Formmassen nach Ansprüchen 1 - 7, dadurch gekennzeichnet, daß die zweite Hülle c) ein (pfropf)-polymerisiertes Polymerisat aus polymerisierbaren Monomeren wie Styrol, α-Methylstyrol, Acrylnitril, Alkyl-(meth)acrylate mit bis zu 8 C-Atomen im Alkoholrest, Maleinsäurederivaten, Maleinimid oder Vinylacetat besteht.

9. Formteile, hergestellt durch thermoplastische Verarbeitung von Formmassen nach Ansprüchen 1 - 8.

10. Verfahren zur Herstellung von schlagzähen, thermoplastischen Formmassen durch thermoplastische Vermischung von Polyamiden mit teilchenförmigen Pfropfkautschuken, dadurch gekennzeichnet, daß man Polyamide I mit Pfropfkautschuken II nach Anspruch 1 vermischt.